**Europäisches Patentamt**

**European Patent Office**

**Office européen des brevets**

(19)

(11) Veröffentlichungsnummer : **0 264 449 B1**

(12)

# EUROPÄISCHE PATENTSCHRIFT

(45) Veröffentlichungstag der Patentschrift :
**17.07.91 Patentblatt 91/29**

(51) Int. Cl.$^5$ : **G01M 11/06**

(21) Anmeldenummer : **86904464.4**

(22) Anmeldetag : **24.04.86**

(86) Internationale Anmeldenummer :
**PCT/SU86/00035**

(87) Internationale Veröffentlichungsnummer :
**WO 87/06694 05.11.87 Gazette 87/24**

(54) **VORRICHTUNG ZUR MESSUNG ZEITLICHER PARAMETER EINES LICHTSIGNALGERÄTES.**

(43) Veröffentlichungstag der Anmeldung :
**27.04.88 Patentblatt 88/17**

(45) Bekanntmachung des Hinweises auf die
Patenterteilung :
**17.07.91 Patentblatt 91/29**

(84) Benannte Vertragsstaaten :
**CH DE FR GB IT LI SE**

(56) Entgegenhaltungen :
**DE-A- 2 800 380**
**DE-B- 1 956 560**
**FR-A- 2 024 204**
**FR-A- 2 217 944**
**FR-A- 2 396 371**
**Referatives Sammelheft "Autotraktoren elek-**
**troausrüstung", Heft 9, 1974 (NIIAVTOPROM),**
**VV Konoplev ua. "Gerät zur Ermittlung der**
**zeitlichen Kenndaten von Automobilfahrtrich-**
**tungsanzeigern", Seite 3-6**

(73) Patentinhaber :
**NAUCHNO-ISSLEDOVATELSKY I**
**EXPERIMENTALNY INSTITUT**
**AVTOMOBILNOGO ELEKTROBORUDOVANIA I**
**AVTOPRIBOROV**
**ul. Kirpichnaya, 39/41**
**Moscow 105187 (SU)**
Patentinhaber : **GOSUDARSTVENNY**
**NAUCHNO-ISSLEDOVATELSKY INST.**
**AVTOMOBILNOGO TRANSPORTA**
**ul. Geroev Panfilovtsev, 24**
**Moscow 123514 (SU)**

(72) Erfinder : **LAPTEV, Vladimir Polikarpovich**
**ul. Moskovskaya, 1-212 Moskovskaya obl.**
**Ljubertsy, 140011 (SU)**
Erfinder : **NOVAKOVSKY, Leonid Grigorievich**
**Chernitsynsky proezd, 8-119**
**Moscow, 107241 (SU)**
Erfinder : **REZNIK, Alexandr Moiseevich**
**bulvar Rokossovskogo, 14-39**
**Moscow, 107150 (SU)**
Erfinder : **ROITMAN, Boris Aronovich**
**Federativny prospekt, 6-6-51**
**Moscow, 111397 (SU)**

(74) Vertreter : **Ebbinghaus, Dieter et al**
**v. FÜNER, EBBINGHAUS, FINCK Postfach 95**
**01 60**
**W-8000 München 95 (DE)**

EP 0 264 449 B1

## Beschreibung

Die Erfindung betrifft eine Einrichtung zur Messung zeitlicher Parameter von Lichtsignalgeräten.

Die Messungen der zeitlichen Parameter von Fahrzeuglicht- signalgeräten werden bei verschiedener Außenbeleuchtung und bei Änderung der Speisespannung der Signalgeräte durchgeführt, was zu einer Änderung deren Lichtstärke führt. Infolgedessen sinkt die Meßgenauigkeit solcher zeitlichen Parameter wie die Zeit bis zum erstmaligen Aufblinken der Signallampen und das Verhältnis der Brennzeit der Signallampen zur Zykluszeit.

Bekannt ist eine Einrichtung zur Messung zeitlicher Parameter von Fahrzeuglichtsignalgeräten (s. beispielsweise DE-PS 2800380), die einen Fotoempfänger enthält, dessen Ausgang mit einem Registriergerät verbunden ist. Diese Einrichtung ist mit Justiereinrichtungen und den Fotoempfänger von den äußeren Lichtquellen abschirmenden Einrichtungen versehen, die den Einfluß von Änderungen der Stärke der Außenbeleuchtung auf das Meßergebnis abschwächen und die Meßgenauigkeit erhöhen. Jedoch ist für die Arbeitsvorbereitung dieser Einrichtung ein zusätzlicher Zeitaufwand für die Justierung des Fotoempfängers und des Lichtsignalgerätes erforderlich, was die Arbeitsproduktivität bei der Prüfung der zeitlichen Parameter von Fahrzeuglichtsignalgeräten herabsetzt.

Bekannt ist auch eine Einrichtung zur Messung zeitlicher Parameter von Lichtsignalgeräten (s. zum Beispiel Roitman B.A., Konoplew V.V. "Gerät zur Ermittlung der zeitlichen Kenndaten von Automobilfahrtrichtungsanzeigern". "Autotraktorenausrüstung", Heft 9, NIIAVTOPROM, 1974), die einen Fotoempfänger, einen Komparator, dessen einer Eingang mit dem Fotoempfänger und dessen anderer Eingang mit einer regulierbaren Bezugssignalquelle verbunden sind, und ein Registriergerät, dessen Eingang mit dem Ausgang des Komparators in Verbindung steht, enthält. Mit Hilfe der regulierbaren Bezugssignalquelle wird die Ansprechschwelle des Komparators für verschiedene äußere Meßbedingungen eingestellt. Jedoch sind für eine solche Einstellung der Ansprechschwelle ein zusätzlicher Zeitaufwand und zusätzliche Einrichtungen, zum Beispiel ein Oszillograf erforderlich, was die Arbeitsproduktivität bei der Durchführung der Messungen herabsetzt und die Meßausrüstung kompliziert macht.

Der Erfindung liegt die Aufgabe zugrunde, eine solche Einrichtung zur Messung zeitlicher Parameter von Lichtsignalgeräten zu schaffen, deren schaltungsmäßige Ausführung es gestattet, die Arbeitsproduktivität bei der Durchführung der Messungen zu steigern.

Dies wird dadurch erreicht, daß die Einrichtung zur Messung zeitlicher Parameter von Lichtsignalgeräten, die einen Fotoempfänger, einen Komparator, dessen erster Eingang mit dem Fotoempfänger und dessen Ausgang mit dem Eingang einer Registriereinheit verbunden sind, enthält, gemäß der Erfindung zusätzlich eine Differenziereinheit, deren Eingang mit dem Ausgang des Fotoempfängers in Verbindung steht, eine Speichereinheit, deren Signaleingang mit dem Ausgang des Fotoempfängers und deren Ausgang mit dem anderen Eingang des Komparators in Verbindung stehen, eine Einheit zur Formierung eines dem maximalen Eingangssignal zugeordneten Signals, deren Eingang an die Differenziereinheit gelegt ist, und ein Flipflop, dessen Eingang an die Einheit zur Formierung eines dem maximalen Eingangssignal zugeordneten Signals und dessen Ausgang an den Steuereingang der Speichereinheit gelegt sind, aufweist.

Die Anwendung der Einrichtung zur Messung zeitlicher Parameter von Lichtsignalgeräten gestattet es, die Arbeistproduktivität bei der Durchführung der Messungen durch Verkürzung der für die Messung der zeitlichen Parameter von Lichtsignalgeräten aufgewendeten Zeit zu steigern.

Nachstehend folgt eine ausführliche Beschreibung einer erfindungsgemäßen Einrichtung zur Messung zeitlicher Parameter von Lichtsignalgeräten unter Bezugnahme auf die beiliegenden Zeichnungen. Es zeigen :

Fig. 1 das Blockschema einer erfindungsgemäßen Einrichtung zur Messung zeitlicher Parameter von Lichtsignalgeräten ;

Fig. 2 das elektrische Schaltbild einer Differenziereinrichtung ;

Fig. 3 das elektrische Schaltbild einer Speichereinheit ;

Fig. 4 das elektrische Schaltbild einer Einheit zur Formierung eines dem maximalen Eingangssignal zugeordneten Signals ;

Fig. 5 (a, b) zeitliche Funktionsdiagramme der erfindungsgemäßen Einrichtung.

Beste Ausführungsform der Einrichtung :

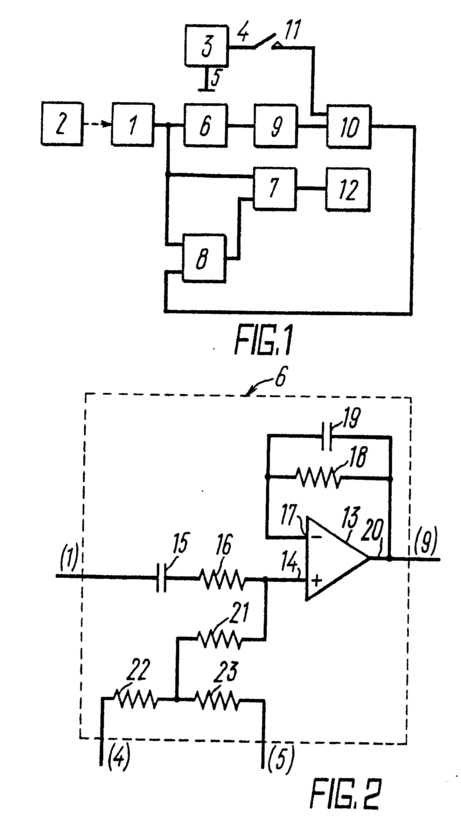

Die Einrichtung zur Messung zeitlicher Parameter von Lichtsignalgeräten enthält einen Fotoempfänger (Fig. 1), auf welchen der Lichtstrom des Lichtsignalgerätes 2 gerichtet ist.

Der Fotoempfänger 1 kann als Reihenschaltung aus einem Widerstand und einem Fotowiderstand, die an eine Speisequelle 3 mit einer positiven Schiene 4 und einer negative Schiene 5 angeschlossen sind, ausgeführt sein.

Der Fotoempfänger 1 kann auch als Fotozelle ausgeführt sein, deren erster Anschluß an die negative Schiene 5 der Speisequelle 3 gelegt ist, während der zweite Anschluß derselben als Ausgang des Fotoempfängers 1 dient.

Der Fotoempfänger 1 kann weiterhin als Reihenschaltung aus einem Widerstand und einer Fotodiode, die an die Speisequelle 3 angeschlossen sind, ausgeführt sein. Bei Benutzung als Fotoempfänger 1 einer Reihenschaltung aus einem Widerstand und einem Fotowiderstand bzw. einer Reihenschaltung aus einem Widerstand und einer Fotodiode dient als Ausgang des Fotoempfängers 1 der Verbindungspunkt dieser Elemente.

Mit dem Ausgang des Fotoempfängers 1 ist der Eingang einer Differenzeireinheit 6, der erste Eingang eines Komparators 7 und der Signaleingang einer Speichereinheit 8 verbunden. Mit dem Ausgang der Differenziereinheit 6 ist der Eingang einer Einheit 9 zur Formierung eines dem maximalen Eingangssignal zugeordneten Signals verbunden. Mit dem Ausgang der Einheit 9 ist der erste Eingang eines Flipflops 10 verbunden. Der zweite Eingang des Flipflops 10 ist mit der positiven Schiene 4 der Speisequelle 3 über einen Schalter 11 mit Selbstrückkehr verbunden. Der Ausgang des Flipflops 10 ist mit dem Steuereingang der Speichereinheit 8 verbunden. Der Ausgang der Speichereinheit 8 ist mit dem zweiten Eingang des Komparators 7 verbunden. Die Einrichtung enthält auch eine Registriereinheit 12, deren Eingang mit dem Ausgang des Komparators 7 in Verbindung steht.

Als Registriereinheit 12 kann ein Frequenzmesser, ein Sekundenmesser und ein Meßgerät zur Ermittlung des Verhältnisses der Brennzeit des Lichtsignalgerätes 2 zur Zykluszeit des Lichtsignalgerätes benutzt werden.

Die Differenziereinheit 6 (Fig. 2) enthält einen Operationsverstärkers 13, dessen nichtinvertierender Eingang 14 über eine Reihenschaltung aus einem Differenzierkondensator 15 und einem Begrenzungswiderstand 16 an den Fotoempfänger 1 angeschlossen ist. Der invertierende Eingang 17 des Operationsverstärker 13 ist über eine Parallelschaltung aus einem Widerstand 18 und einem Kondensator 19 mit seinem Ausgang 20 verbunden. Der nichtinvertierende Eingang 14 des Operationsverstärkers 13 ist auch über einen Widerstand 21 mit einem Spannungsteiler, der mit den an die positive Schiene 4 und die negative Schiene 5 angeschlossenen Widerständen 22 und 23 ausgeführt ist, verbunden. Als Ausgang der Differenziereinheit 6 dient der Ausgang 20 des Operationsverstärkers 13.

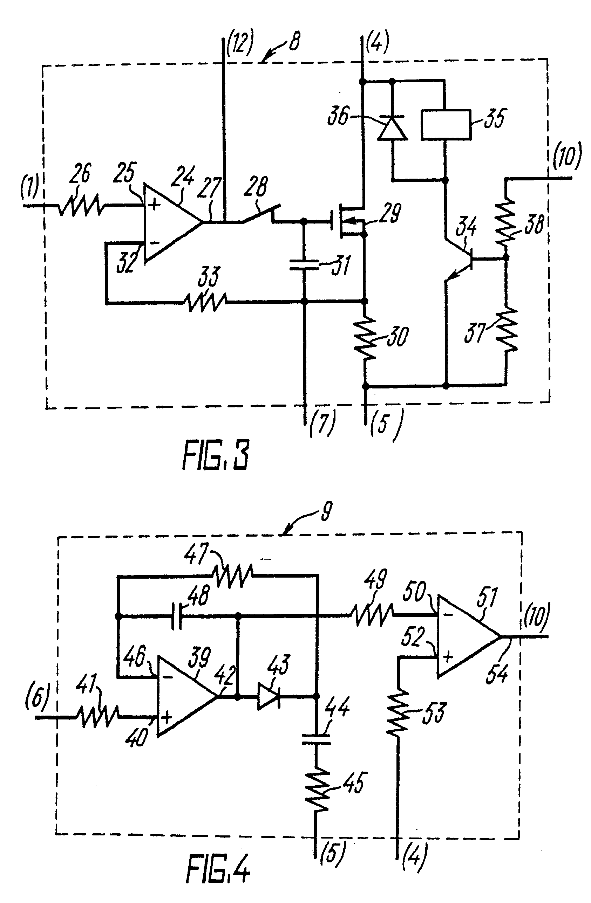

Die Speichereinheit 8 enthält einen Operationsverstärker 24 (Fig. 3), dessen nichtinvertierender Eingang 25 über einen Widerstand 26 mit dem Ausgang des Fotoempfängers 1 verbunden ist. Der Ausgang 27 des Operationsverstärkers 24 ist über die Öffnungskontakte 28 eines Relais mit der Torelektrode eines Feldtransistors 29 verbunden. Die Senke des Feldtransistors 29 ist mit der positiven Schiene 4 der Speisequelle 3 und die Quelle des Feldtransistors 29 über einen Widerstand 30 mit der negativen Schiene 5 der Speisequelle 3 verbunden. Zwischen der Torelektrode und der Quelle des Feldtransistors 29 liegt ein Kondensator 31. Der invertierende Eingang 32 des Operationsverstärkers 24 ist über einen Widerstand 33 auch mit der Quelle des Feldtransistors 29 verbunden. Die Speichereinheit 8 enthält auch einen Transistor 34, dessen Emitter mit der negativen Schiene 5 der Speisequelle 3 verbunden ist. An den Kollektor des Transistors 34 ist das erste Ende den relaiswicklung 35 angeschlossen. Das zweite Ende der Relaiswicklung 35 ist an die positive Schiene 4 der Speisequelle 3 angeschlossen. Parallel zur Relaiswicklung 35 liegt eine Diode 36. Die Basis des Transistors 34 ist über einen Widerstand 37 mit der negativen Schiene 5 der Speisequelle 3 verbunden.

An die Basis des Transistors 34 ist auch einer der Anschlüsse des Widerstandes 38 gelegt. Der andere Anschluß des Widerstandes 38 dient als Steuereingang der Speichereinheit 8 und ist mit dem Ausgang des Flipflops 10 verbunden. Die Quelle des Feldtransistors 29 dient als Ausgang der Speichereinheit 8 und ist mit dem Eingang des Komparators 7 verbunden.

Der Operationsverstärker 24 kann gleichzeitig nicht nur in der Speichereinheit 8 sondern auch als Komparator 7 benutz werden. In diesem Falle dient der Ausgang 27 des Operationsverstärkers 24 als Ausgang des Komparators 7 und ist mit dem Eingang der Registriereinheit 12 verbunden.

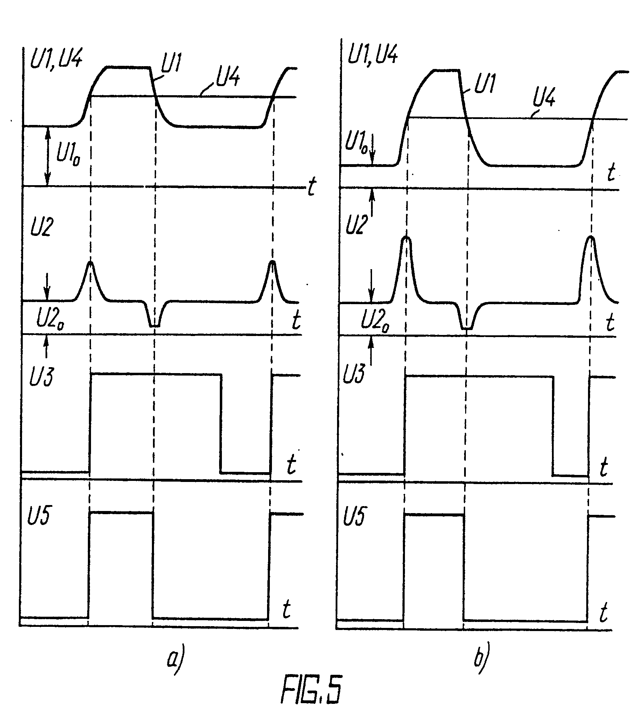

Die Einheit 9 zur Formierung eines dem maximalen Eingangssignal zugeordneten Signals (Fig. 4) enthält einen Operationsverstärkers 39, dessen nichtinvertierender Eingang 40 über einen Widerstand 41 mit dem Ausgang der Differenziereinheit 6 verbunden ist. Mit dem Ausgang 42 des Operationsverstärkers 39 steht die Anode einer Diode 43 in Verbindung. Die Kathode der Diode 43 ist über eine Reihenschaltung aus einem Kondensator 44 und einem Widerstand 45 mit der negativen Schiene 5 der Speisequelle verbunden. Der invertierende Eingang 46 des Operationsverstärkers 39 und der Verbindungspunkt der Kathode der Diode 48 und des Kondensators 44 sind miteinander über einen Widerstand 47 verbunden. Zwischen dem invertierenden Eingang 46 des Operationsverstärkers 39 und dem Ausgang 42 des Operationsverstärkers 39 ist ein Kondensator 48 geschaltet. Mit dem Ausgang 42 des Operationsverstärkers 39 ist über einen widerstand 49 auch der invertierende Eingang 50 des Operationsverstärkers 51 verbunden. Der nichtinvertierende Eingang 52 des Operationsverstärkers 51 ist über einen Widerstand 53 mit der positiven Schiene 4 der Speisequelle 3 verbunden. Der Ausgang 54 des Operationsverstärkers 51 dient als Ausgang der Einheit 9 und ist an den ersten Eingang des Flipflops 10 (Fig. 1) angeschlossen.

Die Operationsverstärker 13 (Fig. 2), 24 (Fig. 3), 39 und 51 (Fig. 4) sind Nortonverstärker (s. Rutkowsky Th., Integraloperationsverstärker, Moskau, Mir, 1978).

Die Einrichtung funktioniert folgenderweise :

Beim Einschalten der Blinklichtsignalgeräte 2 (Fig. 1) entsteht am Ausgang des Fotoempfängers 1 ein periodisches Signal U1 (Fig. 5, a, b), das zur Differenziereinheit 6 (Fig. 1) gelangt. In der Differenziereinheit 6 wird dieses Signal über den Differenzierkondensator 15 (Fig. 2) und den Widerstand 16 auf den nichtinvertierenden Eingang 14 des Operationsverstärkers 13 gegeben. Das Signal $U_2$ (Fig. 5) am Ausgang 20 (Fig. 2) des Operationsverstärkers 13 ist proportional der Ableitung des Signals $U_1$, das dem Ausgang des Fotoempfängers 1 (Fig. 1) entnommen wird. Beim Eintreffen des Signals $U_1$ (Fig. 5) an der Differenziereinheit der Vorderflanke steigt das Signal am Ausgang der Differenziereinheit 6 an und nimmt dann bis zum Anfangspegel $U_{20}$ ab, der sich nach dem Abschluß des Brennübergangsvorganges der Lichtsignalgeräte 2 (Fig. 1) einstellt. Beim Eintreffen des Signals $U_1$ (Fig. 5) an der Differenziereinheit 6 der Hinterflanke nimmt das Signal $U_2$ am Ausgang der Differenziereinheit (Fig. 2) ab und steigt dann bis zum Anfangspegel $U_{20}$ (Fig. 5) an. Der Anfangspegel $U_{20}$ wird mit Hilfe des mit den Widerständen 22 und 23 (Fig. 25) ausgeführten Spannungsteilers eingestellt.

Bei der Zunahme des Signals $U_2$ (Fig. 5), das am Eingang der Einheit 9 (Fig. 1) zur Formierung eines dem maximalen Eingangssignalwert zugeordneten Signals eintrifft, wird der Kondensator 44 (Fig. 4) über die Diode 43 und den Widerstand 45 aufgeladen. Das Signal am Ausgang 42 des Operationsverstärkers 39 der Einheit 9 ist in dieser Zeit dem Signal $U_2$ (Fig. 5) proportional. Nachdem das Signal $U_2$ den Höchstpegel erreicht hat und abzunehmen beginnt, ändert sich die Spannung in dem Verbindungspunkt der Diode 43 (Fig. 4) und des Kondensators der Einheit 9 langsamer als das Signal $U_2$ (Fig. 2). Deshalb wird nach dem Durchgang des Signals $U_2$ durch seinen Maximalwert am Ausgang 42 (Fig. 4) des Operationsverstärkers 39 ein niedriger Ausgangsspannungspegel formiert. Der Operationsverstärker 51 der Einheit 9 ist mit Hilfe von Widerständen 49 und 53 derart abgestimmt, daß er bei niedrigem Spannungspegel am Ausgang 42 des Operationsverstärkers 39 einen hohen Spannungspegel am Ausgang der Einheit 9 liefert.

Die Einheit 9 zur Formierung eines dem maximalen Eingangssignalwert zugeordneten Signals (Fig. 1) erzeugt ein Ausgangssignal $U_3$ (Fig. 5) mit hohem Pegel beim Durchgang des Signals $U_2$ durch seinen Maximalwert. Die weitere Änderung des Signals $U_3$ am Ausgang der Einheit 9 (Fig. 1) hat keinen Einfluß auf die Arbeit der Einrichtung.

Vor der Durchführung der Messungen wird das Flipflop 10 (Fig. 1) mittels des Schalters 11 mit Selbstrückkehr in den Anfangszustand gebracht, bei dem an seinem Ausgang ein Signal mit niedrigem Spannungspegel formiert wird. Die niedrige Spannungspegel am Ausgang des Flipflops bleibt so lange erhalten, bis an seinem ersten Eingang vom Ausgang der Einheit 9 ein Signal mit hohem Spannungspegel eintrifft, welches das Flipflop 10 in den Zustand mit hohem Ausgangsspannungspegel umsteuert.

Hat das Signal am Ausgang des Flipflops 10 (Fig. 1) einen niedrigen Spannungspegel, so ist der Transistor 34 (Fig. 3) der Speichereinheit 8 gesperrt, die Relaiswicklung ist stromlos und die Relaiskontakte 28 sind geschlossen. Hierbei wiederholt das Signal am Ausgang der Speichereinheit 8 (Senke des Transistors 29) das Signal $U_1$ (Fig. 5) am Ausgang des Fotoempfängers 1 (Fig. 1), während die Spannung am Kondensator 31 (Fig. 4) einem solchen Wert entspricht, bei dem die Gleichheit des Signals $U_1$ (Fig. 5) und des Ausgangssignals $U_4$ der Speichereinheit 8 (Fig. 1) erfüllt wird. Bei der Umsteuerung des Flipflops 10 in den Zustand mit hohem Ausgangsspannungspegel, die beim Durchgang des Signals $U_2$ (Fig. 2) durch seinen Maximalwert erfolgt, wird der Transistor 34 (Fig. 3) geöffnet, die Relaiswicklung 35 wird an die Speisequelle 3 (Fig. 1) gelegt und die Relaiskontakte 28 (Fig. 3) werden geöffnet. Hierbei wird am Ausgang des Speicheinheit 8 ein Signal $U_4$ (Fig. 5) eingespeichert, das dem Signal am Ausgang des Fotoempfängers 1 (Fig. 1) bei der Umsteuerung des Flipflops 10 in den Zustand mit hohem Ausgangsspannungspegel gleich ist. Die Speicherung des Signals $U_4$ (Fig. 5) erfolgt durch die am Kondensator 31 (Fig. 3) gespeicherte Ladung.

Der Komparator 7 (Fig. 1) vergleicht die Signale $U_1$ und $U_4$ (Fig. 5) und erzeugt ein Signal $U_5$, dessen hoher Pegel der Überschreitung der Spannung des Signals $U_4$ durch die Spannung des Signals $U_1$ entspricht. Der Operationsverstärker 24 (Fig. 1) erzeugt bei geöffneten Relaiskontakten 28 ein Signal, das dem Signal $U_5$ (Fig. 5) analog ist.

Vom Ausgang des Komparators 7 (Fig. 1) wird das Signal auf den Eingang der Registriereinheit 12 gegeben, die dieses Signal verarbeitet und den registrierten zeitlichen Parameter des Lichtsignalgerätes 2 anzeigt.

Aus den in Fig. 5 (a, b) gezeigten Zeitdiagrammen geht hervor, daß die Stärke der äußeren Beleuchtung, die dem Anfangspegel des dem Fotoempfänger 1 (Fig. 1) entnommenen Signals $U_{10}$ entspricht, in Fig. 5 (a) höher als in Fig. 5 (b) ist. Dadurch, daß das Ausgangssignal $U_4$ der Speichereinheit 8 nach dem Maximum der Ableitung der Vorderflanke des Ausgangssignals $U_1$ des Fotoempfängers 1 (Fig. 1) formiert wird, liegt es stets im Änderungsbereich des Ausgangssignals $U_1$ des Fotoempfängers unabhängig von der Stärke der äußeren Beleuchtung $U_{10}$.

Die Anwendung der Einrichtung zur Messung der zeitlichen Parameter von Lichsignalgeräten gestattet es, die Diagnostierung der Fahrtrichtungsanzeiger zu beschleunigen und damit die Arbeitsproduktivität bei der Durchführung der Messungen zu steigern. Hierbei haben Änderungen der Stärke der Außenbeleuchtung, der Speisespannung der Lichtsignalgeräte und deren Leistung in geringerem Maße Einfluß auf die Meßgenauigkeit.

Die Erfindung kann in Automobiltransportbetrieben, im Automobilservicedienst und in Automobilwerken Verwendung finden.

## Patentansprüche

1. Einrichtung zur Messung zeitlicher Parameter von Lichtsignalgeräten, die einen Fotoempfänger (1), einen Komparator (7), dessen erster Eingang mit dem Fotoempfänger (1) und dessen Ausgang mit dem Eingang einer Registriereinheit (12) verbunden sind, enthält, dadurch gekennzeichnet, daß sie zusätzlich eine Differenziereinheit (6), deren Eingang mit dem Ausgang des Fotoempfängers (1) verbunden ist, eine Speichereinheit (8), deren Signaleingang mit dem Ausgang des Fotoempfängers (1) und der Ausgang derselben mit dem anderen Eingang des Komparators (7) in Verbindung stehen, eine Einheit (9) zur Formierung eines dem maximalen Eingangssignal zugeordneten Signals, deren Eingang an die Differenziereinheit (6) gelegt ist, und ein Flipflop (10), dessen Eingang an die Einheit (9) zur Formierung eines dem maximalen Eingangssignal zugeordneten Signals und dessen Ausgang an den Steuereingang der Speichereinheit (8) gelegt sind, enthält.

## Revendications

1. Appareil de mesure des paramètres temporaux de dispositif de signalisation lumineuse, qui comprend un photorécepteur (1), un comparateur (7) dont la première entrée est reliée au photorécepteur (2) et dont la sortie est reliée à l'entrée d'un dispositif d'enregistrement (12), caractérisé en ce qu'il comprend supplémentairement une unité de différentiation (6) dont l'entrée est reliée à la sortie du photorécepteur (1), une unité de stockage (8) dont l'entrée de signal est reliée à la sortie du photorécepteur (1) et dont la sortie est reliée à l'autre entrée du comparateur (7), une unité (9) pour la formation d'un signal associé au signal d'entrée maximal et dont l'entrée est connectée à l'unité de différentiation (6) et une bascule (10) dont l'entrée est reliée à l'unité (9) pour la formation d'un signal associé au signal d'entrée maximal et dont la sortie est reliée à l'entrée de commande de l'unité de stockage.

## Claims

1. A device for measuring temporal parameters of light signalling devices, comprising a photodetector (1), a comparator (7), the first input of which is connected to said photodetector (1) and the output of which is connected to the input of a registering unit (12), characterized in that it also comprises a differential unit (6), the input of which is connected to the output of said photodetector (1), a storage unit (8), the signal input of which is connected to the output of said photodetector (1) and the output of which is connected to the other input of said comparator (7), a unit (9) for shaping a signal associated with the maximum input signal, the input of which is connected to said differential unit (6), and a flipflop (10), the input of which is connected to said unit (9) for shaping a signal associated with the maximum input signal and the output of which is connected to the control input of the storage unit (8).

FIG.1

FIG.2

FIG. 3

FIG. 4

FIG.5